# EUROPEAN PATENT APPLICATION

(11) **EP 4 411 597 A1**
(43) Date of publication of application: **07.08.2024**
(21) Application number: 24152587.2
(22) Date of filing: 18.01.2024
(51) Int. Cl.: G06N 3/094, G06F 21/56, G06N 3/09, G06N 3/0464, G06N 20/20

(54) **DETECTING OUT-OF-DISTRIBUTION DATA SAMPLE IN A MACHINE LEARNING OPERATION**

(30) Priority: 20.01.2023 US 202318099722
(71) Applicant: BlackBerry Limited, Waterloo, Ontario N2K 0A7 (CA)
(72) Inventor: ASHKAN, Amiri, Waterloo, N2K0A7 (CA)
(74) Representative: MERH-IP Matias Erny Reichl Hoffmann Patentanwälte PartG mbB

(57) **Abstract**

Systems, methods, and software can be used to detect distribution assessments of production data sample of a machine learning operation. In some aspects, a method includes: receiving, from a first machine learning model, pre-activation data, wherein the pre-activation data comprises pre-activation information of one or more neurons of the first machine learning model, and the pre-activation data is obtained when the first machine learning model processes a production data sample to generate a prediction outcome; using, a second machine learning model to process the pre-activation data to generate a distribution assessment; and determining, based on the distribution assessment, wherein the production data sample is an adversarial data sample or a drift data sample.

## Description

### TECHNICAL FIELD

The present disclosure relates to detecting out-of-distribution data samples in a machine learning operation.

### BACKGROUND

In some implementations, a machine learning model is used to generate prediction outcomes of data samples. For example, the machine learning model can be used in malware detection to determine whether a software code may contain malware code and thus, incur security risk. The machine learning model can also be used in imaging processing, to determine whether the image data contain certain objects or resemble certain figures. The machine learning model can also be used in voice recognition, to determine text of the audio data. The machine learning model can be used in other applications.

### DESCRIPTION OF DRAWINGS

FIG. 1 is a schematic diagram showing an example system that uses out-of-distribution sample (ODS) detection machine learning operations for malware detection, according to an implementation.
FIG. 2 is a schematic diagram showing an example machine learning operation, according to an implementation.
FIG. 3 is a schematic diagram showing an example ODS detection machine learning development process, according to an implementation.
FIG. 4 is a schematic diagram showing an example ODS detection machine learning production operation, according to an implementation.
FIG. 5 is a flowchart showing an example method for an ODS detection machine learning operation, according to an implementation.
FIG. 6 illustrates a high-level architecture block diagram of a computer, according to an implementation.
FIG. 7 a schematic diagram showing an example of generating input for the ODS detection machine learning operation, according to an implementation.
FIG. 8 a schematic diagram showing another example of generating input for the ODS detection machine learning operation, according to an implementation.
FIG. 9 is a schematic diagram showing an example of aggregating prediction results of multiple ODS detection models, according to an implementation

Like reference numbers and designations in the various drawings indicate like elements.

### DETAILED DESCRIPTION

In some cases, the input data sample of the machine learning model may be significantly different from normal distribution of data samples. These data samples are referred to as out-of-distribution samples (ODS). The occurrence of the ODS data samples may be caused by a distribution shift of data samples, for example, an input stream of data samples that are categorically different from the previous data samples that are used to train the machine learning model. For example, the machine learning model may be used to detect facial recognition and was trained with pictures of human faces. Then, a batch of input data sample may contain digits instead of pictures of human faces. The occurrence of the ODS may also be caused by adversarial attacks. For example, an attacker may generate data samples that are different from the normal data samples in a particular aspect to confuse or mislead the machine learning model and generate false outcomes.

The presence of ODS reduces the accuracy of the machine learning models. In some implementations, changes in the performance metrics of the machine learning operations, such as accuracy, F1 Score, False and True positive rates, loss value, and the like can be monitored to detect the presence of ODS samples. The performance metrics can be averaged over large amounts of input data to identify whether a significant change in the statistical properties of those metrics has taken place. Thus, data needs to be collected and analyzed over a relatively long period of time (e.g., days, weeks, and sometimes months) before a significant change can be detected. As a result, important indicators of ODS samples often get buried in the average behavior and therefore become hard to detect. Accordingly, it takes a long time to identify and respond to a model drift or adversarial attack.

In some cases, an auxiliary model can be trained separately to extract features from the input data and determine whether the input data are ODS samples. However, the performance of the auxiliary model can be inferior because the main model that generates the prediction outcome often does a better job of feature extraction. Adding an auxiliary model also complicates the end-to-end pipeline (from training to deployment to operations) of the machine learning operations. Also, the auxiliary model may be subject to its own drift due to being trained separately.

In some implementations, the operation metrics of the main model that generates the prediction outcome can be used in ODS detection. The pre-activation data (also referred to as logits) of the neurons in the hidden layers of the main model can be used as input to a second machine learning model that processes these pre-activation data to detect ODS samples.

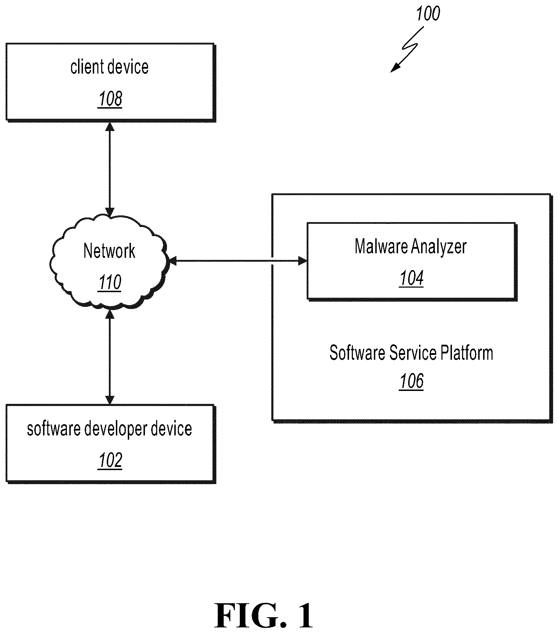

Techniques described herein produce one or more technical effects. This approach takes an average of the processing metrics of the main model that is fine tuned for feature extraction. This approach also provides a fast turn-around time to detect model drift or adversarial attacks and trigger quick response. This approach can be used to collect ODS samples that can be used to retrain the main model and trigger such a retraining. This approach can further include additional optimization techniques to reduce the complexity of the ODS detection. This approach can also allow flexible deployment modes. FIGS. 1-8 and associated descriptions provide additional details of these implementations.

In one example, this approach can be used to detect ODS in a machine learning operation for malware detection. FIG. 1 is a schematic diagram showing an example system 100 that uses ODS detection machine learning operations for malware detection, according to an implementation. At a high level, the example system 100 includes a software developer device 102 that is communicatively coupled with a software service platform 106 and a client device 108 over a network 110. In some cases, the software developer device 102 can be part of a software developer environment that includes multiple devices, servers, and cloud computing platforms.

The software developer device 102 represents an application, a set of applications, software, software modules, hardware, or any combination thereof, that can be configured to submit the software code to the software service platform 106. In some cases, the functions of the software developer device 102 and the software service platform 106 can be implemented on a single device. For example, the software code can be created on the software service platform 106 instead of being received from the software developer device 102. The software code can be downloaded to the client device 108 to be executed on the client device 108. The software code can also be executed on the software service platform 106 to provide software services to the client device 108. Examples of the software services can include software as a service (SaaS) application such as SALESFORCE, OFFICE 365, or other software application services.

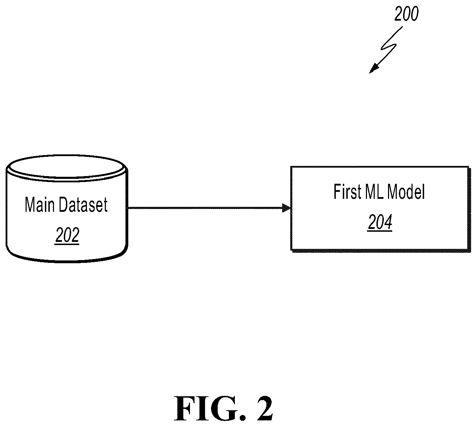

The software service platform 106 includes a malware analyzer 104. The malware analyzer 104 represents an application, a set of applications, software, software modules, hardware, or any combination thereof, that are executed on the software service platform 106 to identify security risks in software code. In some implementations, the malware analyzer 104 can obtain software code and use a first ML model to determine whether the software code contains malware. The malware analyzer 104 can use a second ML model to determine whether the software code is an ODS sample that would impact the performance of the first ML model. The malware analyzer 104 can further initiate retraining of the first ML model and trigger attack notification based on the output of the second ML model. FIGS. 2-8 and associated descriptions provide additional details of these implementations.

The software code analyzed by the malware analyzer 104 can be source code or binary code. In a software development process, source code can be created by programmers using a text editor or visual programming tool prior to compilation. The source code can be developed with a human-readable programming language and may be saved in a text file. The source code can be transformed by an assembler or a compiler into binary software code that can be executed by the computer.

The binary software code can include a stream of bytes that are generated by compiling the source code. Thus, the binary software code may not be in a human-readable format and may not be easily parsed or analyzed by a human.

The binary software code can be in a configuration of object code, executable code, or bytecode. An object code is the product of compiler output of a sequence of statements or instructions in a computer language. The source code can be logically divided into multiple source files. Each source file is compiled independently into a corresponding object file that includes object code. The object codes in the object files are binary machine codes, but they may not be ready to be executed. The object files can include incomplete references to subroutines outside themselves and placeholder addresses. During the linking process, these object files can be linked together to form one executable file that includes executable code that can be executed on a computing device. During the linking process, the linker can read the object files, resolve references between them, perform the final code layout in the memory that determines the addresses for the blocks of code and data, fix up the placeholder addresses with real addresses, and write out the executable file that contains the executable code.

A bytecode, also referred to as portable code or p-code, is a form of instruction set designed for efficient execution by a software interpreter. Bytecodes include compact numeric codes, constants, and references (normally numeric addresses) that encode the result of compiler parsing and performing semantic analysis of things like type, scope, and nesting depths of program objects. The bytecode includes instruction sets that have one-byte opcodes followed by optional parameters. Intermediate representations such as the bytecode may be output by programming language implementations to ease interpretation, or may be used to reduce hardware and operating system dependence by allowing the same code to run cross-platform, on different devices. The bytecode may often be either directly executed on a virtual machine (a p-code machine i.e., interpreter), or it may be further compiled into machine code for better performance. In some cases, binary software code that is coded using platform-independent languages such as JAVA can be stored in the bytecode format.

The software service platform 106 can be implemented using one or more computers, computer servers, or a cloud-computing platform.

The client device 108 represents an electronic device that accesses a software service provided by the software provider. In some cases, a browser or a client application can be executed on the client device 108 to communicate service requests and service responses with the software service platform of the software provider to obtain software services.

Turning to a general description, the client device 108 may include, without limitation, any of the following: endpoint, computing device, mobile device, mobile electronic device, user device, mobile station, subscriber station, portable electronic device, mobile communications device, wireless modem, wireless terminal, or another electronic device. Examples of an endpoint may include a mobile device, IoT (Internet of Things) device, EoT (Enterprise of Things) device, cellular phone, personal data assistant (PDA), smart phone, laptop, tablet, personal computer (PC), pager, portable computer, portable gaming device, wearable electronic device, health/medical/fitness device, camera, vehicle, or other mobile communications devices having components for communicating voice or data via a wireless communication network. A vehicle can include a motor vehicle (e.g., automobile, car, truck, bus, motorcycle, etc.), aircraft (e.g., airplane, unmanned aerial vehicle, unmanned aircraft system, drone, helicopter, etc.), spacecraft (e.g., spaceplane, space shuttle, space capsule, space station, satellite, etc.), watercraft (e.g., ship, boat, hovercraft, submarine, etc.), railed vehicle (e.g., train, tram, etc.), and other types of vehicles including any combinations of any of the foregoing, whether currently existing or after arising. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used interchangeably herein.

The example system 100 includes the network 110. The network 110 represents an application, set of applications, software, software modules, hardware, or combination thereof, that can be configured to transmit data messages between the entities in the example system 100. The network 110 can include a wireless network, a wireline network, the Internet, or a combination thereof. For example, the network 110 can include one or a plurality of radio access networks (RANs), core networks (CNs), and the Internet. The RANs may comprise one or more radio access technologies. In some implementations, the radio access technologies may be Global System for Mobile communication (GSM), Interim Standard 95 (IS-95), Universal Mobile Telecommunications System (UMTS), CDMA2000 (Code Division Multiple Access), Evolved Universal Mobile Telecommunications System (E-UMTS), Long Term Evaluation (LTE), LTE-Advanced, the fifth generation (5G), or any other radio access technologies. In some instances, the core networks may be evolved packet cores (EPCs).

A RAN is part of a wireless telecommunication system which implements a radio access technology, such as UMTS, CDMA2000, 3GPP LTE, 3GPP LTE-A, and 5G. In many applications, a RAN includes at least one base station. A base station may be a radio base station that may control all or at least some radio-related functions in a fixed part of the system. The base station may provide radio interface within their coverage area or a cell for a mobile device to communicate. The base station may be distributed throughout the cellular network to provide a wide area of coverage. The base station directly communicates to one or a plurality of mobile devices, other base stations, and one or more core network nodes.

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a schematic diagram 200 showing an example machine learning operation, according to an implementation. The illustrated machine learning operation can be implemented as computer programs on one or more computers in one or more locations, in which the systems, components, and techniques described below can be implemented. The diagram 200 includes a main dataset 202 and a first ML model 204. The first ML model 204 is trained, validated, and tested by using the main dataset 202.

The first ML model 204 architecture can be implemented by using any appropriate machine learning model architecture that enables it to perform its described function. For example, when configured as a neural network, the first ML model 204 may include at least one neural network layer, e.g., at least one fully connected layer or convolutional layer. In the case of multiple neural network layers, they may be stacked, so as to pass data successively between them in a certain layer order. Each neuron in one layer is connected to some or all neurons in the next layer.

In some cases, the first ML model 204 can include the following layers: an input layer that takes as input the raw data and passes them to the rest of the network; one or more hidden layers that are intermediate layers between the input and output layer and process the data by applying complex non-linear functions to them, and an output layer that takes as input the processed data and produces the final results.

The hidden layers transform the input features into processed features that can be classified in the output layer. Each layer is implemented by using mathematical functions that apply weights to the input to produce an output specific to an intended result. In some cases, hidden layers can be implemented in a hierarchical way, where each layer in the hidden layers is specialized in producing one transformation for a target result and passes the output values to the next layer for further processing. During a machine learning operation, the pre-activation value is the value computed before applying the activation function, and the post-activation value is the value computed after applying the activation function. In other words, the post-activation values of the hidden layers are the outputs of the neurons in the hidden layers, and the pre-activation values of the hidden layers are inputs of the neurons in the hidden layers.

The main dataset 202 includes datasets for data samples that are used as input for the machine learning operation. In one example, the machine learning operation can be used to identify malware. In this case, the data samples in the main dataset 302 can be software codes. The first ML model 204 can be trained to identify the software codes that have risk of including malware or malicious codes. The machine learning operation can be used for other purposes, e.g., speech recognition, character recognition, image classification, or other applications. In operation, the data samples in the main dataset 202 can also be referred to as production data samples and the main dataset 202 can be referred to as production dataset. The first ML model 204 can also be referred to as the production ML model. The first ML model 204 can receive data samples from the main dataset 202 and generate prediction outcomes.

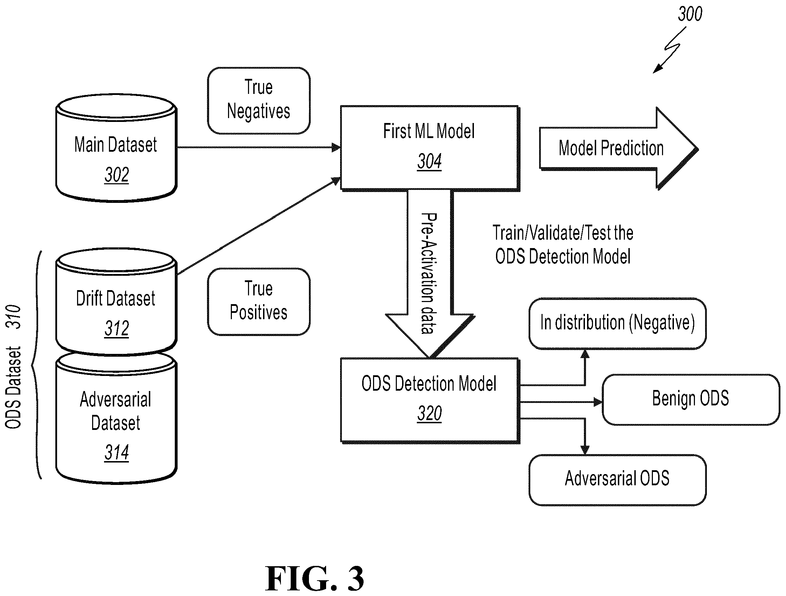

FIG. 3 is a schematic diagram 300 showing an example ODS detection machine learning development process, according to an implementation. The illustrated machine learning development process can be implemented as computer programs on one or more computers in one or more locations, in which the systems, components, and techniques described below can be implemented.

The diagram 300 includes a main dataset 302 and a first MI, model 304. As discussed in FIG. 2, the first ML model 304 can receive data samples from the main dataset 302 and generate prediction outcomes.

The diagram 300 also includes an ODS dataset 310 and an ODS detection model 320. The ODS detection model 320 receives pre-activation data from the hidden layers in the first ML model 304. The pre-activation data are generated when the first ML model 304 processes each data sample from the main dataset 302. The ODS detection model 320 generates a distribution assessment of the data sample by processing the pre-activation data. The distribution assessment can be in-distribution, benign, or adversarial.

The ODS detection model 320 can be implemented by using a machine learning model such as anomaly detection, deep learning, graph neural nets, or a combination thereof. An in-distribution assessment indicates that the data sample is part of normal distribution of input data. A benign distribution assessment indicates that the data sample is a drift data sample. This indicates that the data is outside of normal distribution but probably a valid input. An adversarial assessment indicates that the data sample is generated deliberately by an adversary to confuse or mislead the first ML model 304 in generating a correct prediction outcome.

To train the ODS detection model 320, we can use following two datasets: an in-distribution dataset, which can be taken from the data samples of the main dataset 302 that was used to train and validate and test the first ML model 304; and an ODS dataset 310. The ODS dataset 310 includes two parts: the drift dataset 312 and the adversarial dataset 314. The drift dataset 312 includes benign data samples, which are outside of the normal distribution of the in-distribution dataset but are still valid data samples. In other words, the data samples in the drift dataset 312 are different than the data samples in the in-distribution dataset in a statistically significant way but are still generated or collected in real world operations. On the other hand, the data samples in the adversarial dataset 314 are data samples that not generated in real world applications but created to manipulate a machine learning model.

The ODS dataset 310 can be generated in different ways. For instance: drift/adversarial examples can be collected in past operations that have not yet been used to train the first ML model 304. These examples are often identified when the first ML model 304 makes a wrong inference and breaks a downstream process. Another source can be other datasets that include data points not relevant to what the first ML model 304 was trained on. In one example, the first ML model 304 may be trained to identify human faces in image data. Out of scope samples such as images of digits, objects, animals may be used as data samples in the ODS dataset 310. Synthesized data can also be used to generate the ODS dataset 310. Synthesized data is generated by applying a generative model on the normal data samples. In one example, a generative model can be trained on the main dataset 302 by using an encoder-decoder framework. Then, the main dataset 302 can be encoded to identify regions in the latent space that are occupied by the encodings of the data samples in the main dataset 302. A random sampling, e.g., fully random sampling or domain knowledge guided sampling, can be used to generate new encodings. The new encodings can be decoded by the decoder to create data samples in the ODS dataset 310. The techniques described previously can be used to create both drift dataset 312 and adversarial dataset 314. In some implementations, the synthesized data approach described previously can be used to generate the adversarial dataset 314 because it has high complexity, while the other techniques described previously (e.g., out of scope samples and previously unused samples) may be used to generate the drift dataset 312 due to the low complexity and cost.

The in-distribution dataset in the main dataset 302 provides the ground truth for negative samples and the ODS dataset 310 provides the ground truth for positive samples. In operation, data samples from both the in-distribution dataset and the ODS dataset 310 are fed to the first ML model 304 for processing to generate prediction. The pre-activation data of the first ML model 304 are fed into the ODS detection model 320 to train the ODS detection model 320 to achieve prediction of the distribution assessments of these data samples. Examples of metrics used by the ODS detection model 320 to make prediction decisions include: precision/recall, F1-score, confusion matrix such as True Positive Rate(TPR), False Positive Rate(FPR), False Negative Rate(FNR), True Negative Rate(TNR).

Since the number of neurons in the first ML model can be large, analyzing its hidden layers' pre-activation data can be costly. In some cases, the ODS machine learning can be simplified by prioritizing the pre-activation data based on how important each hidden layer of the first ML model is for the identification of ODS. Different approaches can be used to identify the importance of each layer: In one example, the ODS detection model 320 can be trained with the pre-activation outputs (also referred to as logits) of each layer of the first ML model 304 separately. The importance level of each layer can be determined based on the performance of the ODS detection model 320 by using the pre-activation outputs of that particular layer of the first ML model 304. By comparing the performances generated by the pre-activation outputs of different layers, the importance levels of each layer can be set. In some cases, the importance levels can be set to a number corresponding to the rank of the performance, e.g., the layer with the best performance is set to the highest number, and the layer with second best performance is set to the second highest number, and so on. Alternatively, or additionally, the importance levels can be set to a number according to the value of the performance output metrics, e.g., set to 0.35 when the accuracy of the prediction using pre-activation outputs of that layer is 35%. A threshold can be configured. Only the pre-activation data associated with the neurons in the layers above the threshold are used as input to the ODS detection model 320. By reducing the size of the inputs of the ODS detection model 320, the complexity of the ODS detection model 320 can be reduced.

In another example, a Lasso algorithm can be used to train the ODS detection model 320. At first, the pre-activation data of all the neurons in the first ML model 304 are used during the training of the ODS detection model 320. L1 norm is added to the cost function that is used to train the ODS detection model 320. Therefore, sparsity is imposed on the ODS detection model weights and the less important connections (weights) are pushed down to zero. When the training of the ODS detection model 320 is completed, the importance of each layer of the first ML model 304 can be inferred from the percentage of the neurons of the first ML model 304 that were actively used in the ODS detection model 320. After the training of the ODS detection model 320 is completed, each weight of the first layer connections of the ODS detection model 320 is associated with a corresponding neuron in the first ML model 304. As such, the neurons of the first ML model 304 that are associated with non-zero weights in the ODS detection model 320 are likely to be more important for the ODS detection. And the value of the weight can indicate the level of importance of the associated neuron, with the larger the weight, the more important the associated neuron may be. This approach provides a more granular view to see which neurons in each layer of the first ML model 304 are more important for ODS detection. This information can be used to reduce the computational complexity of the ODS detection model 320, by prioritizing the layers of the first ML model 304 that are more important for ODS detection. For example, we can leave out those neurons of the first ML model 304 that are either not connected or are weakly connected to the first layer of the ODS detection model. For example, we can leave out the neurons that are associated with connections that have a weight of zero or those that have small weights, e.g., below a configured threshold. This approach will help to reduce the input size of the ODS detection model 320 and therefore the complexity of the ODS detection model 320.

Alternatively or additionally, other techniques such as feature importance or dimensionality reduction can also be used to reduce the complexity.

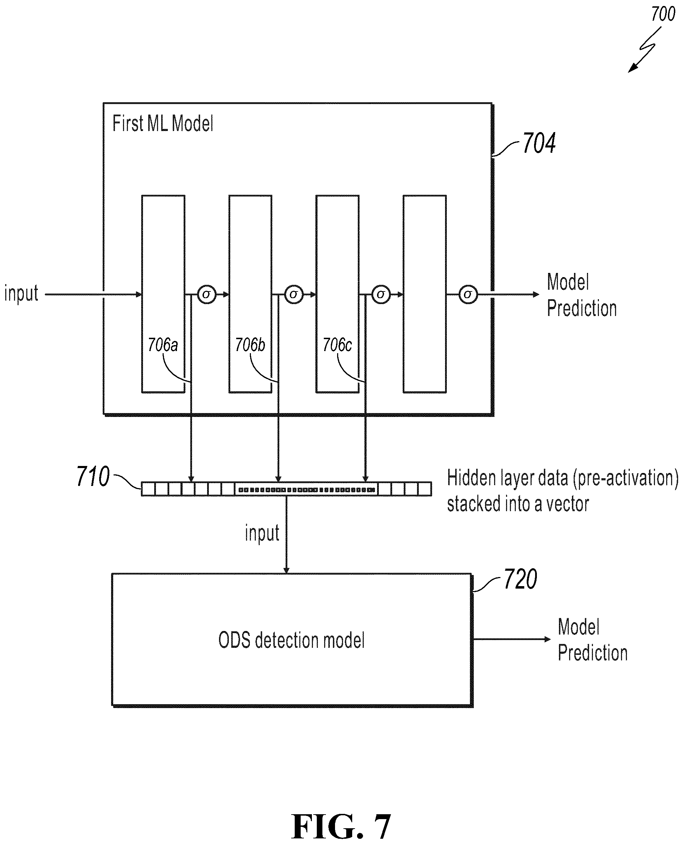

In some cases, the pre-activation tensors in the first ML model 304 can be flattened and stacked into a single vector that is used as the input to the ODS detection model 320. FIG. 7 a schematic diagram 700 showing an example of generating input for the ODS detection machine learning operation, according to an implementation. As illustrated, the pre-activation data for each of the hidden layers in the first ML model 704, shown as 706a, 706b, and 706c in FIG. 7, are stacked into a vector 710. The vector is used as input to the ODS detection model 720.

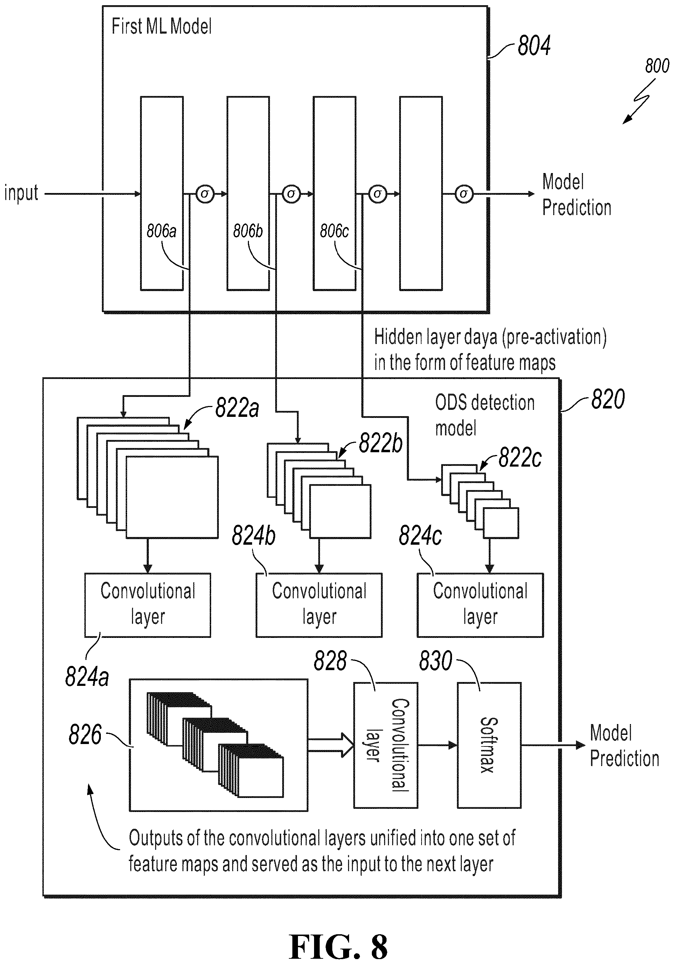

Other approaches can also be used to package the pre-activation data to produce the input to the ODS detection model 320. For example, the pre-activation data can be combined in a way based on the design of the ODS detection model 320. FIG. 8 a schematic diagram 800 showing another example of generating input for the ODS detection machine learning operation, according to an implementation. In the illustrated example, each hidden layer in the first ML model 804 produces a feature map. Thus, the pre-activation data of each layer can represent the feature map produced by the previous layer. For example, in FIG. 8, the pre-activation data 806a, 806b, and 806c represent feature maps 822a, 822b, and 822c, respectively. Instead of flattening and stacking the pre-activation data of different hidden layers in the first ML model into one vector (like FIG. 7), the pre-activation data of each layer can be processed separately by a corresponding initial convolutional layer (shown as 824a, 824b, and 824c, respectively in FIG. 8) in the ODS detection model 820 to generate new feature maps. The new feature-maps produced by the initial convolutional layers can then be stacked to form a unified set 826 of feature maps. This unified set 826 is used as input to be processed by the subsequent one or more convolutional layers 828, followed by other layer 830 (for example, an output layer with an activation function of choice, e.g., Sigmoid, ReLU, etc., followed by the softmax function) of the ODS detection model 820 to produce a ODS detection prediction.

While convolutional neural network are used an example in the previous discussions, other types of ML-based model can be used to implement the first ML model, the ODS detection model, or both.

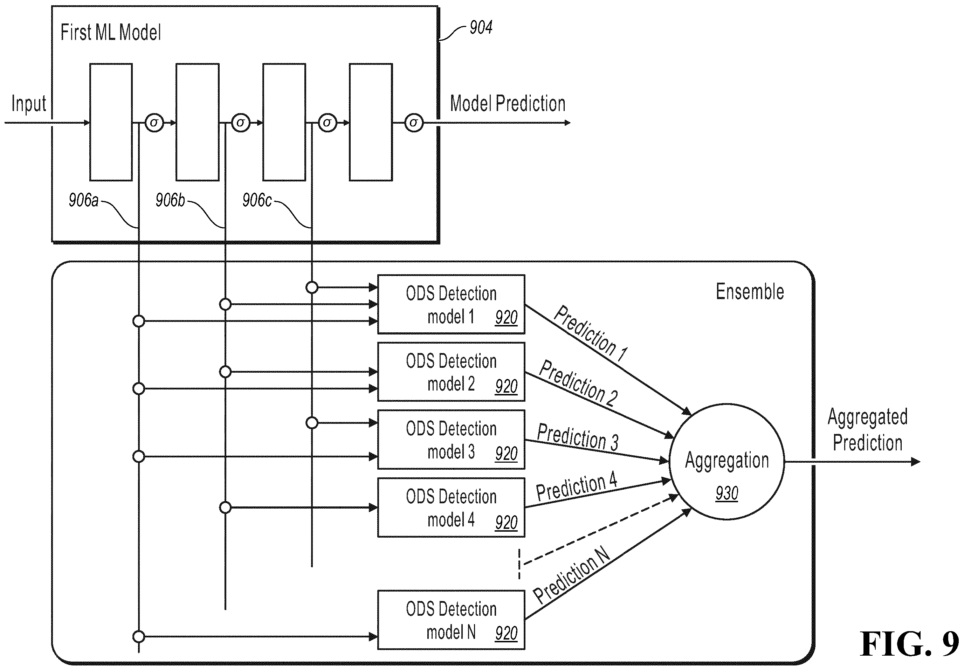

In some cases, more than one ODS detection model can be used. The predictions from multiple ODS detection models can be combined using an aggregation operation. FIG. 9 is a schematic diagram 900 showing an example of aggregating prediction results of multiple ODS detection models, according to an implementation. In the illustrated example, each hidden layer in the first ML model 904 produces pre-activation data, i.e., 906a, 906b, and 906c that are used as input to each of the ODS detection model 920 in the ensemble. Each ODS detection model 920 in the ensemble may have a different architecture. In some case, different ODS detection model in the ensemble may use a different subset of the pre-activation data (of the first ML model 904) to generate a prediction. For example, as shown in FIG. 9, the ODS detection model 1 uses pre-activation data 906a, 906b, and 906c, while the ODS detection model 2 uses pre-activation data 906a and 906b. The prediction generated by each of the ODS detection model 920 are aggregated by the aggregation function 930. The aggregation function 930 can use analytics based aggregation mechanisms. For example, counting number of votes for each category of distribution, including: in-distribution, benign, or adversarial, and selecting the category with the highest number of votes as the winner). The aggregation function 930 can also use ML based aggregation mechanisms. For example, an ML aggregation model (e.g., logistic regression, Convolutional Net, etc.) can receive the predictions of the ODS detection models 920 as input and then generates an aggregated prediction. When the analytics based aggregation mechanism is used, the ODS detection models 920 can be trained in a greedy fashion. When the ML based aggregation mechanism is used, common ensemble learning techniques can be used, e.g., the ODS detection models 920 and the ML aggregation model are first trained in a greedy fashion separately, and then are fine-tuned as an ensemble using backpropagation.

In some implementations, a subset of the in-distribution dataset and the ODS dataset 310 can be used to train the ODS detection model 320. Other subsets can be used to further validate and test the ODS detection model 320.

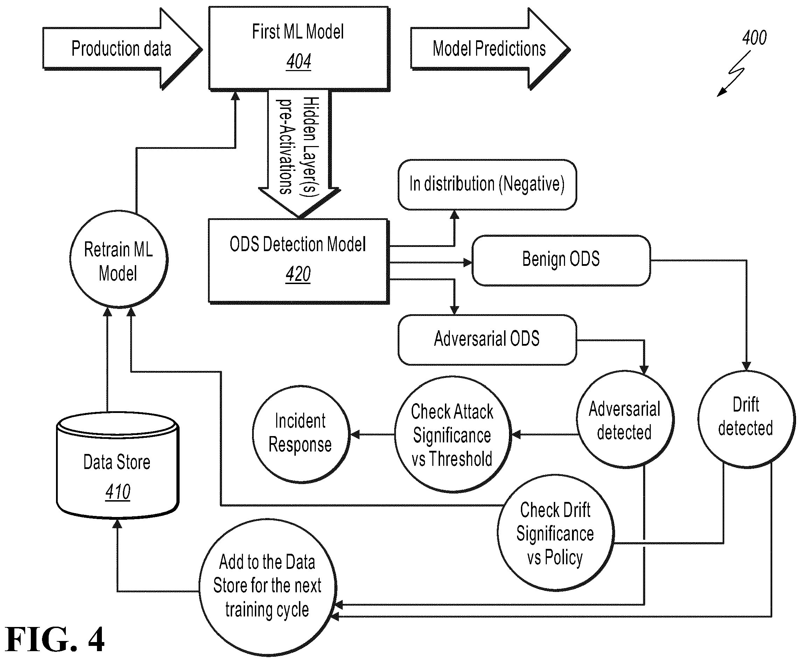

FIG. 4 is a schematic diagram 400 showing an example ODS detection machine learning production operation, according to an implementation. The illustrated machine learning production operation can be implemented as computer programs on one or more computers in one or more locations, in which the systems, components, and techniques described below can be implemented.

The diagram 400 includes a first ML model 404. As discussed previously, the first ML model 404 can receive production data samples and generate prediction outcomes.

The diagram 400 also includes an ODS detection model 420 and a data store 410. As discussed previously, the ODS detection model 420 receives pre-activation data from the hidden layers in the first ML model 404 when each data sample is processed and generates distribution assessment for the data sample. The distribution assessment can be in-distribution, benign, or adversarial.

When the distribution assessment of a data sample is benign, the data sample is a drift sample. The drift sample is added to the data store 410, together with the classification label indicating that the sample is a drift sample. When the distribution assessment of a data sample is adversarial, the data sample is an adversarial sample. The adversarial sample is added to the data store 410, together with the label indicating that the sample is an adversarial sample.

In some cases, policy can be configured to determine whether the ODS assessments, including drift and adversarial assessment, have reached a significant level that triggers additional operations. For example, the policy can include a configured threshold for the number of detected drift samples, the number of detected adversarial samples, or both. The configured threshold can further be configured for a configured duration, or a configured number of total data samples being processed by the first ML model 404. If the configured threshold for the number of detected drift samples, the number of detected adversarial samples, or both, is reached, a notification may be generated to indicate that the first ML model 404 may be retrained. The notification can include statistics information of operation of the ODS detection model, such as the number of different types of distribution assessments. The notification can be output in a user interface of the computers performing the ODS machine learning production operation. Alternatively, or additionally, the notification can be sent to another device for further outputting or processing.

In some implementations, the policy can also include a configured attack threshold to detect an attack. The configured attack threshold can further be configured for a configured duration, or a configured number of total data samples being processed by the first ML model 404. If the configured attack threshold for the detected adversarial samples is reached, an attack notification may be generated to indicate that an attack on the production operation of the first ML model 404 has been detected. The attack notification can include statistics information of operation of the ODS detection model, such as the number of different types of distribution assessments. The attack notification can be output in a user interface of the computers performing the ODS machine learning production operation. Alternatively, or additionally, the attack notification can be sent to another device for further outputting or processing. In some cases, an incident response can be triggered by the attack notification. For example, a command can be sent to the first ML model 404 to stop the production operation to avoid damage by the attack. In some implementations, the same configured attack threshold or a different configured attack threshold can be used to trigger the retraining of the ODS detection model 420.

The data store 410 collects the detected drift samples and adversarial samples that can be used to retrain the first ML model 404, the ODS detection model 420, or both.

The ODS machine learning production operation can be run in online mode, batch mode, or offline mode. In an online mode, the ODS machine learning production operation is run together with the production operation of the first ML model 404 and generates distribution assessment for production data sample in real time. In the batch mode, the pre-activation data and corresponding data samples are saved in a batch file and processed by the ODS detection model 420 in batches. In the offline mode, the pre-activation data and corresponding data samples are saved and processed by the ODS detection model 420 when the first ML model 404 finishes production. The operation mode can be selected based on the resource allocation (such as processor power and memory size) and the response time of the notification and incident response.

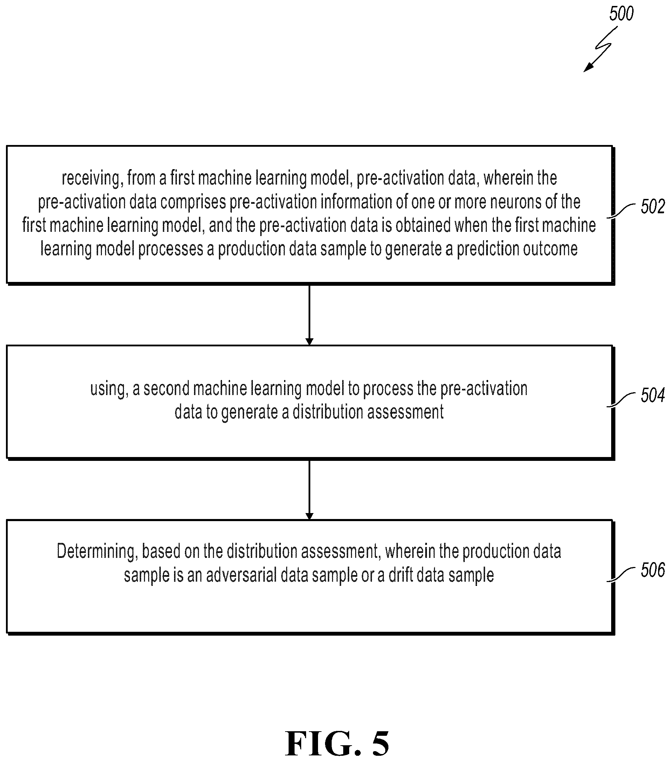

FIG. 5 is a flowchart showing an example method 500 for an ODS detection machine learning operation, according to an implementation. The example method 500 can be implemented by a server, e.g., the software service platform 106 shown in FIG. 1. The example method 500 shown in FIG. 5 can be implemented using additional, fewer, or different operations, which can be performed in the order shown or in a different order.

At step 502, pre-activation data is received from a first machine learning model. The pre-activation data comprises pre-activation information of one or more neurons of the first machine learning model, and the pre-activation data is obtained when the first machine learning model processes a production data sample to generate a prediction outcome. At step 504, a second machine learning model is used to process the pre-activation data to generate a distribution assessment. At step 506, the production data sample is determined to be an adversarial data sample. or a drift data sample based on the distribution assessment.

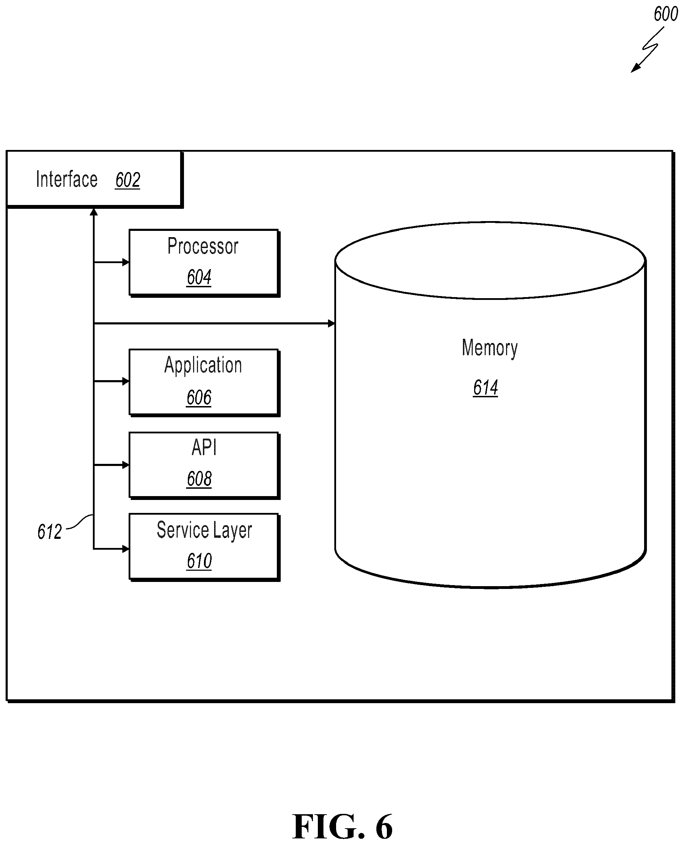

FIG. 6 illustrates a high-level architecture block diagram of a computer 600 according to an implementation. The computer 600 can be implemented as one of the software developer devices 102, the software service platform 106, and the client device 108 of FIG. 1. The computer 600 can also be used to implement the machine learning operations discussed in FIGS. 2-5. The described illustration is only one possible implementation of the described subject matter and is not intended to limit the disclosure to the single described implementation. Those of ordinary skill in the art will appreciate the fact that the described components can be connected, combined, and/or used in alternative ways consistent with this disclosure.

In some cases, the processing algorithm of the code package establishment can be implemented in an executable computing code, e.g., C/C++ executable codes. In some cases, the computer 600 can include a standalone Linux system that runs batch applications. In some cases, the computer 600 can include mobile or personal computers.

The computer 600 may comprise a computer that includes an input device, such as a keypad, keyboard, touch screen, microphone, speech recognition device, other device that can accept user information, and/or an output device that conveys information associated with the operation of the computer, including digital data, visual and/or audio information, or a GUI.

The computer 600 can serve as a client, network component, a server, a database or other persistency, and/or any other components. In some implementations, one or more components of the computer 600 may be configured to operate within a cloud-computing-based environment.

At a high level, the computer 600 is an electronic computing device operable to receive, transmit, process, store, or manage data. According to some implementations, the computer 600 can also include or be communicably coupled with an application server, e-mail server, web server, caching server, streaming data server, business intelligence (BI) server, and/or other server.

The computer 600 can collect data of network events or mobile application usage events over network 110 from a web browser or a client application, e.g., an installed plugin. In addition, data can be collected by the computer 600 from internal users (e.g., from a command console or by another appropriate access method), external or third parties, other automated applications, as well as any other appropriate entities, individuals, systems, or computers.

Each of the components of the computer 600 can communicate using a system bus 612. In some implementations, any and/or all the components of the computer 600, both hardware and/or software, may interface with each other and/or the interface 602 over the system bus 612 using an API 608 and/or a service layer 610. The API 608 may include specifications for routines, data structures, and object classes. The API 608 may be either computer language-independent or - dependent and refer to a complete interface, a single function, or even a set of APIs. The service layer 610 provides software services to the computer 600. The functionality of the computer 600 may be accessible for all service consumers using this service layer. Software services, such as those provided by the service layer 610, provide reusable, defined business functionalities through a defined interface. For example, the interface may be software written in JAVA, C++, or other suitable languages providing data in Extensible Markup Language (XML) format or another suitable format. While illustrated as an integrated component of the computer 600, alternative implementations may illustrate the API 608 and/or the service layer 610 as stand-alone components in relation to other components of the computer 600. Moreover, any or all parts of the API 608 and/or the service layer 610 may be implemented as child or sub-modules of another software module, enterprise application, or hardware module without departing from the scope of this disclosure.

The computer 600 includes an interface 602. Although illustrated as a single interface 602 in FIG. 6, two or more interfaces 602 may be used according to particular needs, desires, or particular implementations of the computer 600. The interface 602 is used by the computer 600 for communicating with other systems in a distributed environment connected to a network (whether illustrated or not). Generally, the interface 602 comprises logic encoded in software and/or hardware in a suitable combination and operable to communicate with the network. More specifically, the interface 602 may comprise software supporting one or more communication protocols associated with communications such that the network or interface's hardware is operable to communicate physical signals within and outside of the computer 600.

The computer 600 includes at least one processor 604. Although illustrated as a single processor 604 in FIG. 6, two or more processors may be used according to particular needs, desires, or particular implementations of the computer. Generally, the processor 604 executes instructions and manipulates data to perform the operations of the computer 600. Specifically, the processor 604 executes the functionality disclosed in FIGS. 1-5 and 7-8.

The computer 600 also includes a memory 614 that holds data for the computer 600. Although illustrated as a single memory 614 in FIG. 6, two or more memories may be used according to particular needs, desires, or particular implementations of the computer 600. While memory 614 is illustrated as an integral component of the computer 600, in alternative implementations, memory 614 can be external to the computer 600.

The application 606 is an algorithmic software engine providing functionality according to particular needs, desires, or particular implementations of the computer 600, particularly with respect to functionality required for anomaly detection. Although illustrated as a single application 606, the application 606 may be implemented as multiple applications 606 on the computer 600. In addition, although illustrated as integral to the computer 600, in alternative implementations, the application 606 can be external to the computer 600.

There may be any number of computers 600 associated with, or external to, and communicating over a network. Furthermore, this disclosure contemplates that many users may use one computer 600, or that one user may use multiple computers 600.

Described implementations of the subject matter can include one or more features, alone or in combination.

For example, in a first implementation, a method includes receiving, from a first machine learning model, pre-activation data, wherein the pre-activation data comprises pre-activation information of one or more neurons of the first machine learning model, and the pre-activation data is obtained when the first machine learning model processes a production data sample to generate a prediction outcome; using, a second machine learning model to process the pre-activation data to generate a distribution assessment; and determining, based on the distribution assessment, wherein the production data sample is an adversarial data sample or a drift data sample.

The foregoing and other described implementations can each, optionally, include one or more of the following features:
A first feature, combinable with any of the following features, further comprising: in response to determining that the production data sample is the adversarial data sample, determining whether an attack has been detected based on a configured policy; and storing the adversarial data sample for a retraining of the first machine learning model.
A second feature, combinable with any of the previous or following features, further comprising: in response to determining that an attack has been detected, generating an attack indication, wherein the attack indication triggers an incident response.
A third feature, combinable with any of the previous or following features, further comprising: in response to determining that the production data sample is the drift data sample, determining whether to retrain the first machine learning model based on a configured policy; and storing the drift data sample for a retraining of the first machine learning model.
A fourth feature, combinable with any of the previous or following features, wherein the production data sample is a software code and the prediction outcome indicates whether the software code has risk of malware.
A fifth feature, combinable with any of the previous or following features, wherein the one or more neurons of the first machine learning model are determined according to an importance level of the one or more neurons.
A sixth feature, combinable with any of the previous features, wherein the pre-activation data is a vector that includes the flattened pre-activation tensors of the one or more neurons.

In a second implementation, a computer-readable medium containing instructions which, when executed, cause a computing device to perform operations comprising receiving, from a first machine learning model, pre-activation data, wherein the pre-activation data comprises pre-activation information of one or more neurons of the first machine learning model, and the pre-activation data is obtained when the first machine learning model processes a production data sample to generate a prediction outcome; using, a second machine learning model to process the pre-activation data to generate a distribution assessment; and determining, based on the distribution assessment, wherein the production data sample is an adversarial data sample or a drift data sample.

The foregoing and other described implementations can each, optionally, include one or more of the following features:
A first feature, combinable with any of the following features, the operations further comprising: in response to determining that the production data sample is the adversarial data sample, determining whether an attack has been detected based on a configured policy; and storing the adversarial data sample for a retraining of the first machine learning model.
A second feature, combinable with any of the previous or following features, the operations further comprising: in response to determining that an attack has been detected, generating an attack indication, wherein the attack indication triggers an incident response.
A third feature, combinable with any of the previous or following features, the operations further comprising: in response to determining that the production data sample is the drift data sample, determining whether to retrain the first machine learning model based on a configured policy; and storing the drift data sample for a retraining of the first machine learning model.
A fourth feature, combinable with any of the previous or following features, wherein the production data sample is a software code and the prediction outcome indicates whether the software code has risk of malware.
A fifth feature, combinable with any of the previous or following features, wherein the one or more neurons of the first machine learning model are determined according to an importance level of the one or more neurons.
A sixth feature, combinable with any of the previous features, wherein the pre-activation data is a vector that includes the flattened pre-activation tensors of the one or more neurons.

In a third implementation, a computer-implemented system comprises: at least one hardware processor; and one or more computer-readable storage medium coupled to the at least one hardware processor and storing programming instructions for execution by the at least one hardware processor, wherein the programming instructions, when executed, cause the system to perform operations comprising receiving, from a first machine learning model, pre-activation data, wherein the pre-activation data comprises pre-activation information of one or more neurons of the first machine learning model, and the pre-activation data is obtained when the first machine learning model processes a production data sample to generate a prediction outcome; using, a second machine learning model to process the pre-activation data to generate a distribution assessment; and determining, based on the distribution assessment, wherein the production data sample is an adversarial data sample or a drift data sample.

The foregoing and other described implementations can each, optionally, include one or more of the following features:
A first feature, combinable with any of the following features, the operations further comprising: in response to determining that the production data sample is the adversarial data sample, determining whether an attack has been detected based on a configured policy; and storing the adversarial data sample for a retraining of the first machine learning model.
A second feature, combinable with any of the previous or following features, the operations further comprising: in response to determining that an attack has been detected, generating an attack indication, wherein the attack indication triggers an incident response.
A third feature, combinable with any of the previous or following features, the operations further comprising: in response to determining that the production data sample is the drift data sample, determining whether to retrain the first machine learning model based on a configured policy; and storing the drift data sample for a retraining of the first machine learning model.
A fourth feature, combinable with any of the previous or following features, wherein the production data sample is a software code and the prediction outcome indicates whether the software code has risk of malware.
A fifth feature, combinable with any of the previous or following features, wherein the one or more neurons of the first machine learning model are determined according to an importance level of the one or more neurons.
A sixth feature, combinable with any of the previous features, wherein the pre-activation data is a vector that includes the flattened pre-activation tensors of the one or more neurons.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible, non-transitory computer-storage medium for execution by, or to control the operation of, data processing apparatus. Alternatively or in addition, the program instructions can be encoded on an artificially generated propagated signal, e.g., a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or a combination of one or more of them.

The terms "data processing apparatus," "computer," or "electronic computer device" (or equivalent as understood by one of ordinary skill in the art) refer to data processing hardware and encompass all kinds of apparatus, devices, and machines for processing data, including by way of example, a programmable processor, a computer, or multiple processors or computers. The apparatus can also be or further include special purpose logic circuitry, e.g., a central processing unit (CPU), an FPGA (field programmable gate array), or an ASIC (application specific integrated circuit). In some implementations, the data processing apparatus and/or special purpose logic circuitry may be hardware-based and/or software-based. The apparatus can optionally include code that creates an execution environment for computer programs, e.g., code that constitutes processor firmware, a protocol stack, a database management system, an operating system, or a combination of one or more of them. The present disclosure contemplates the use of data processing apparatus with or without conventional operating systems, for example LINUX, UNIX, WINDOWS, MAC OS, ANDROID, IOS or any other suitable conventional operating system.

A computer program, which may also be referred to or described as a program, software, a software application, a module, a software module, a script, or code, can be written in any form of programming language, including compiled or interpreted languages, or declarative or procedural languages, and it can be deployed in any form, including as a standalone program or as a module, component, subroutine, or other unit suitable for use in a computing environment. A computer program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

The processes and logic flows described in this specification can be performed by one or more programmable computers, executing one or more computer programs to perform functions by operating on input data and generating output. The processes and logic flows can also be performed by, and apparatus can also be implemented as, special purpose logic circuitry, e.g., a CPU, an FPGA, or an ASIC.

Computers suitable for the execution of a computer program can be based on general or special purpose microprocessors, both, or any other kind of CPU. Generally, a CPU will receive instructions and data from a ROM or a RAM or both. The essential elements of a computer are a CPU for performing or executing instructions and one or more memory devices for storing instructions and data. Generally, a computer will also include, or be operatively coupled to, receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a PDA, a mobile audio or video player, a game console, a GPS receiver, or a portable storage device, e.g., a USB flash drive, to name just a few.

Computer readable media (transitory or non-transitory, as appropriate) suitable for storing computer program instructions and data include all forms of non-volatile memory, media and memory devices, including by way of example semiconductor memory devices, e.g., erasable programmable read-only memory (EPROM), electrically erasable programmable read-only memory (EEPROM), and flash memory devices; magnetic disks, e.g., internal hard disks or removable disks; magneto optical disks; and CD ROM, DVD+/-R, DVD-RAM, and DVD-ROM disks. The memory may store various objects or data, including caches, classes, frameworks, applications, backup data, jobs, web pages, web page templates, database tables, repositories storing business and/or dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), LCD, LED, or plasma monitor, for displaying information to the user and a keyboard and a pointing device, e.g., a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this specification can be implemented in a computing system that includes a back end component, e.g., such as a data server, or that includes a middleware component, e.g., an application server, or that includes a front-end component, e.g., a client computer having a graphical user interface or a Web browser through which a user can interact with an implementation of the subject matter described in this specification, or any combination of one or more such back end, middleware, or front end components. The components of the system can be interconnected by any form or medium of wireline and/or wireless digital data communication, e.g., a communication network. Examples of communication networks include a local area network (LAN), a radio access network (RAN), a metropolitan area network (MAN), a wide area network (WAN), Worldwide Interoperability for Microwave Access (WIMAX), a WLAN using, for example, 802.11 a/b/g/n and/or 802.20, all or a portion of the Internet, and/or any other communication system or systems at one or more locations. The network may communicate with, for example, Internet Protocol (IP) packets, Frame Relay frames, Asynchronous Transfer Mode (ATM) cells, voice, video, data, and/or other suitable information between network addresses.

The computing system can include clients and servers. A client and server are generally remote from each other and typically interact through a communication network. The relationship of client and server arises by virtue of computer programs running on the respective computers and having a client-server relationship with each other.

In some implementations, any or all of the components of the computing system, both hardware and/or software, may interface with each other and/or the interface using an API and/or a service layer. The API may include specifications for routines, data structures, and object classes. The API may be either computer language independent or dependent and refer to a complete interface, a single function, or even a set of APIs. The service layer provides software services to the computing system. The functionality of the various components of the computing system may be accessible for all service consumers via this service layer. Software services provide reusable, defined business functionalities through a defined interface. For example, the interface may be software written in JAVA, C++, or other suitable language providing data in XML format or other suitable formats. The API and/or service layer may be an integral and/or a stand-alone component in relation to other components of the computing system. Moreover, any or all parts of the service layer may be implemented as child or sub-modules of another software module, enterprise application, or hardware module without departing from the scope of this disclosure.

While this specification contains many specific implementation details, these should not be construed as limitations on the scope of any invention or on the scope of what may be claimed, but rather as descriptions of features that may be specific to particular implementations of particular inventions. Certain features that are described in this specification in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can, in some cases, be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking and parallel processing may be advantageous.

Moreover, the separation and/or integration of various system modules and components in the implementations described above should not be understood as requiring such separation and/or integration in all implementations, and it should be understood that the described program components and systems can generally be integrated together in a single software product or packaged into multiple software products.

Accordingly, the above description of example implementations does not define or constrain this disclosure. Other changes, substitutions, and alterations are also possible without departing from the spirit and scope of this disclosure.

## Claims

1. A method, comprising:
receiving, from a first machine learning model, pre-activation data, wherein the pre-activation data comprises pre-activation information of one or more neurons of the first machine learning model, and the pre-activation data is obtained when the first machine learning model processes a production data sample to generate a prediction outcome;
using, a second machine learning model to process the pre-activation data to generate a distribution assessment; and
determining, based on the distribution assessment, wherein the production data sample is an adversarial data sample or a drift data sample.

2. The method of claim 1, further comprising:
in response to determining that the production data sample is the adversarial data sample, determining whether an attack has been detected based on a configured policy; and
storing the adversarial data sample for a retraining of the first machine learning model.

3. The method of claim 2, further comprising:
in response to determining that an attack has been detected, generating an attack indication, wherein the attack indication triggers an incident response.

4. The method of any one of claims 1 to 3, further comprising:
in response to determining that the production data sample is the drift data sample, determining whether to retrain the first machine learning model based on a configured policy; and
storing the drift data sample for a retraining of the first machine learning model.

5. The method of any one of claims 1 to 4, wherein the production data sample is a software code and the prediction outcome indicates whether the software code has risk of malware.

6. The method of any one of claims 1 to 5, wherein the one or more neurons of the first machine learning model are determined according to an importance level of the one or more neurons.

7. The method of any one of claims 1 to 6, wherein the pre-activation data is a vector that includes the flattened pre-activation tensors of the one or more neurons.

8. A computer program which, when executed, causes a computing device to perform the method of any preceding claim.

9. A computer-implemented system, comprising:
one or more computers; and
one or more computer memory devices interoperably coupled with the one or more computers and having tangible, non-transitory, machine-readable media storing one or more instructions that, when executed by the one or more computers, perform the method of any one of claims 1 to 7.
